# EUROPÄISCHE PATENTSCHRIFT

(11) **EP 1 498 018 B1**
(45) Veröffentlichungstag und Bekanntmachung des Hinweises auf die Patenterteilung: **30.07.2008**
(21) Anmeldenummer: 04015060.9
(22) Anmeldetag: 26.06.2004
(51) Int. Cl.: A01D 34/73

(54) **Tandemmesser**
Tandem cutting blade
Lame tandem

(30) Priorität: 18.07.2003 DE 10332638
(43) Veröffentlichungstag der Anmeldung: 19.01.2005
(73) Patentinhaber: Viking GmbH, 6336 Langkampfen (AT)
(72) Erfinder: Duregger, Georg, A-6342 Niederndorf (AT)
(74) Vertreter: Wasmuth, Rolf

(56) Entgegenhaltungen:
- DE-U- 29 715 565
- FR-A- 2 468 289
- GB-A- 2 170 086
- US-A- 3 162 990
- US-A- 5 199 251
- US-A- 5 259 176

## Beschreibung

Die Erfindung betrifft ein Tandemmesser der im Oberbegriff des Anspruchs 1 angegebenen Gattung.

Aus der DE 297 15 565 U1 ist ein Tandemmesser bekannt, das an jedem Ende zwei hintereinander laufende Schneiden besitzt, die in Richtung der Antriebswelle gegeneinander versetzt sind. Das Tandemmesser ist aus einem einzigen Blechstück hergestellt. Die nachlaufenden Schneiden liegen tiefer als die vorlaufenden. Hierdurch ist die Zugänglichkeit zu den hinteren Schneiden beim Nachschärfen eingeschränkt.

Aus der US 5,259,176 A ist ein Tandemmesser mit einem Grundmesser und einem Aufsatzmesser bekannt. Die beiden Messer werden über Schrauben gegeneinander fixiert, mit denen die Messer auch an der Antriebsspindel fixiert werden. Da die Messer sowohl gegeneinander als auch auf der Antriebsspindel positioniert werden müssen, ist die Handhabung umständlich.

Aus der US 3,162,990 ist ein Tandemmesser bekannt, bei dem die Fixierung der beiden Messer gegeneinander und die Fixierung an der Antriebsspindel über die gleichen Schrauben erfolgt.

Die FR 2 468 289 offenbart einen Rasenmäher, bei dem mehrere Einzelmesser in einem Abstand zueinander auf der Antriebsspindel festgelegt werden. Die Messer werden unter Zwischenlage von Distanzhülsen über einen gemeinsamen Bolzen an der Spindel fixiert.

Der Erfindung liegt die Aufgabe zugrunde, ein Tandemmesser der gattungsgemäßen Art zu schaffen, das eine gute Zugänglichkeit zu den Schneiden beim Nachschärfen gewährleistet.

Diese Aufgabe wird durch ein Tandemmesser mit den Merkmalen des Anspruchs 1 gelöst.

Um ein einfaches Nachschärfen der Messerschneide zu ermöglichen, ist vorgesehen, daß das Tandemmesser aus einem Grundmesser und einem Aufsatzmesser gebildet ist. Die beiden Messer besitzen an jedem Ende eine Schneide. Zum Nachschärfen können die beiden Messer voneinander getrennt werden, so daß jede Schneide gut zugänglich ist. Hierdurch ist ein einfaches Nachschärfen des Tandemmessers ermöglicht.

Es ist vorgesehen, daß das Tandemmesser an beiden Endbereichen zwei Schneiden besitzt. Das Tandemmesser ist dabei insbesondere rotationssymmetrisch zur Drehachse ausgebildet. Das Grundmesser besitzt mindestens eine Lasche, die das Aufsatzmesser in Richtung der Drehachse am Grundmesser hält. Die Lasche kann auf einfache Weise einteilig und in einem Arbeitsgang mit dem Grundmesser gefertigt werden. Dadurch, daß das Aufsatzmesser nur über die Lasche gehalten ist, läßt es sich einfach und ohne Werkzeug vom Grundmesser lösen. Vorteilhaft ragt die Lasche durch eine Aussparung am Aufsatzmesser. Eine gute Fixierung des Aufsatzmessers sowie eine gute Lösbarkeit des Aufsatzmessers vom Grundmessers läßt sich erreichen, wenn die Lasche in einem Abstand zum Grundkörper verläuft, der etwa dem einfachen bis eineinhalbfachen der Dicke des Aufsatzmessers entspricht. Um das Aufsatzmesser auf einfache Weise vom Grundmesser lösen zu können, ist vorgesehen, daß das Aufsatzmesser auf dem Grundmesser in einer Ebene parallel zu der durch den Mittelbereich definierten Ebene um einen Verschiebeweg verschiebbar gehalten ist. Vorteilhaft sind zwei Laschen vorgesehen, wobei jede Lasche zwischen der Drehachse und einem Ende des Grundmessers angeordnet ist. Der gesamte Verschiebeweg entspricht insbesondere mindestens dem Doppelten des Abstands, um den eine Lasche in Verschieberichtung hinter den Rand einer Aussparung greift. Hierdurch kann das Aufsatzmesser gegenüber dem Grundmesser zunächst so verschoben werden, daß eine Lasche oberhalb einer Aussparung zu liegen kommt und anschließend so verschoben werden, daß die andere Lasche oberhalb der anderen Aussparung zu liegen kommt und das Aufsatzmesser so in Richtung der Drehachse vom Grundmesser getrennt werden kann. Die Laschen sind insbesondere an ihrer der Drehachse zugewandten Seite am Grundmesser festgelegt. Durch Verschieben des Aufsatzmessers zum einen Ende des Grundmessers kann die auf dieser Seite angeordnete Lasche durch die Aussparung geschoben werden. Durch Verschieben des Grundmessers auf die entgegengesetzte Seite kann auch die zweite Lasche durch die Aussparung geschoben werden, so daß das Aufsatzmesser vom Grundmesser getrennt ist.

Es ist vorgesehen, daß das Grundmesser im Mittelbereich auf der im Betrieb dem Boden zugewandten Unterseite des Tandemmessers angeordnet ist und an den Endbereichen auf der Oberseite. Zweckmäßig ist die Schneide am Grundmesser vorlaufend zur benachbarten Schneide am Aufsatzmesser angeordnet. Die Schneide am Grundmesser ist dabei insbesondere länger als die Schneide am Aufsatzmesser ausgebildet. Vorteilhaft verläuft der Endbereich des Grundmessers parallel zum Mittelbereich des Tandemmessers und in einem an den Endbereich angrenzenden Steigungsbereich in einem Winkel zur Ebene des Mittelbereichs. Die Schneide am Grundmesser erstreckt sich dabei zweckmäßig über den Endbereich und den Steigungsbereich. Der Endbereich des Grundmessers ist zweckmäßig gegenüber dem Mittelbereich in Drehrichtung versetzt. Der Endbereich des Aufsatzmessers ist insbesondere gegenüber dem Mittelbereich entgegen der Drehrichtung versetzt. Die beiden Endbereiche von Grundmesser und Aufsatzmesser können so in Drehrichtung gesehen hintereinander angeordnet werden. Der Mittelbereich des Messers kann vergleichsweise schmal ausgebildet werden. Durch den Versatz an den Endbereichen der Messer sind diese ausreichend breit und damit stabil ausgebildet. Es ist vorgesehen, daß die entgegen der Drehrichtung liegende Ecke am Endbereich mindestens eines Messers gegenüber einer zum Mittelbereich parallelen Ebene auf die Oberseite des Tandemmessers gebogen ist. Durch das Abbiegen der einer Schneide nachlaufenden Ecke kann das Auswerfen des Schnittguts verbessert werden. Um eine einfache Fixierung der beiden Messer gegeneinander im Betrieb zu gewährleisten, ist vorgesehen, daß beidseitig der Aufnahme für die Antriebswelle Befestigungsöffnungen zur Fixierung der beiden Messer gegeneinander angeordnet sind. Durch die Befestigungsöffnungen können beispielsweise Befestigungsdome oder Bolzen oder dgl. ragen. Es ist vorgesehen, daß der Mittelbereich gegenüber einem beidseitig des Mittelbereichs ausgebildeten Seitenbereich in Richtung auf die Oberseite des Tandemmessers versetzt ist. Der Seitenbereich des Aufsatzmessers geht insbesondere eben in den Endbereich des Aufsatzmessers über.

Weitere Merkmale ergeben sich aus der Beschreibung und der Zeichnung, in der ein Ausführungsbeispiel der Erfindung dargestellt ist. Es zeigen:
- Fig. 1: eine perspektivische Darstellung eines Tandemmessers,
- Fig. 2: das Tandemmesser aus Fig. 1 in Draufsicht,
- Fig. 3: das Tandemmesser aus den Fig. 1 und 2 in Seitenansicht,
- Fig. 4: eine Seitenansicht des Grundmessers des Tandemmessers aus den Fig. 1 bis 3,
- Fig. 5: eine Draufsicht auf das Grundmesser aus Fig. 4,
- Fig. 6: eine Seitenansicht des Aufsatzmessers des Tandemmessers aus den Fig. 1 bis 3,
- Fig. 7: eine Draufsicht auf das Aufsatzmesser aus Fig. 6.

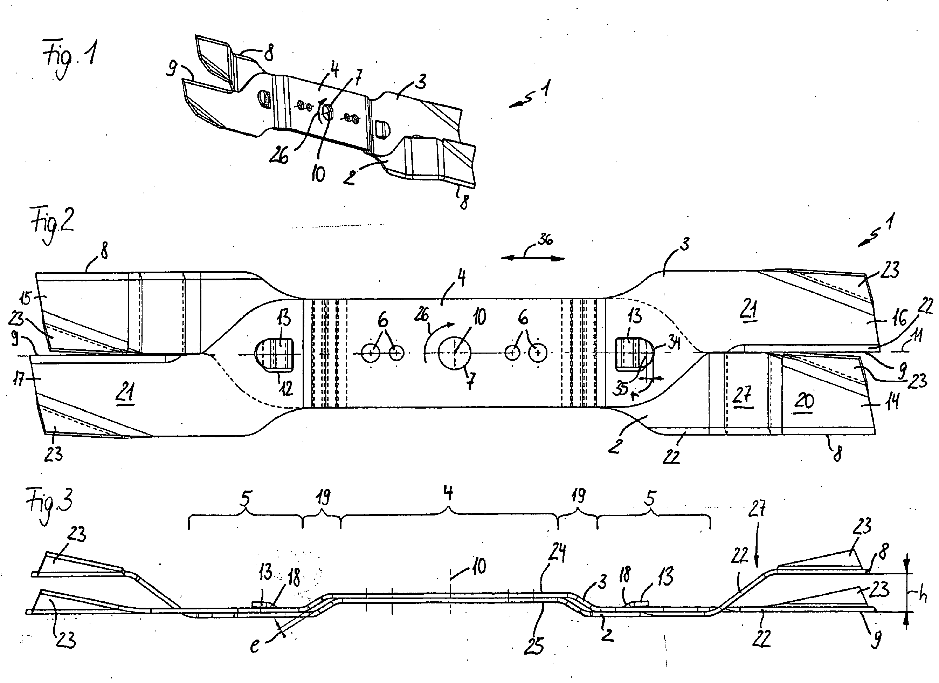

Das in Fig. 1 perspektivisch dargestellte Tandemmesser 1 besitzt eine längliche Form mit einem rechteckig ausgebildeten Mittelbereich 4, in dem eine Aufnahme 7 ausgebildet ist. Die Aufnahme 7 dient zur Aufnahme einer Antriebswelle, insbesondere der Antriebswelle eines Rasenmähers oder dgl., die das Tandemmesser 1 um seine Drehachse 10 in Drehrichtung 26 rotierend antreibt. Das Tandemmesser 1 ist punktsymmetrisch zur Drehachse 10 ausgebildet und besitzt eine Längsachse 11, die parallel zu den Seiten des Tandemmessers 1 im Mittelbereich 4 verläuft. Das Tandemmesser 1 ist aus einem Grundmesser 2 aufgebaut, auf das ein Aufsatzmesser 3 lösbar aufgesetzt ist. Am Grundmesser 2 sind zwei Schneiden 8 und am Aufsatzmesser 3 zwei Schneiden 9 ausgebildet. Jede Schneide 9 ist dabei in Drehrichtung 26 gesehen nachlaufend zu einer Schneide 8 angeordnet.

In Fig. 2 ist das Tandemmesser 1 in Draufsicht dargestellt. Im Mittelbereich 4 des Tandemmessers 1 sind beidseitig der Aufnahme 7 jeweils zwei Befestigungsöffnungen 6 angeordnet. Die Befestigungsöffnungen 6 dienen zur Fixierung der beiden Messer 2, 3 gegeneinander in der durch den Mittelbereich 4 definierten Ebene. Die beiden Messer 2, 3 können durch Befestigungsdome, Bolzen oder dgl. fixiert sein, die beidseitig der Antriebswelle am Rasenmäher festgelegt sein können. Wie insbesondere Fig. 3 zeigt sind beidseitig zum Mittelbereich 4 Übergangsbereiche 19 vorgesehen, in denen die Messer 2, 3 unter einem Winkel gegenüber der Mittelebene 4 verlaufen. An die Übergangsbereiche 19 schließen sich beidseitig Seitenbereiche 5 des Tandemmessers 1 an. In den Seitenbereichen 5 verlaufen die Messer 2, 3 parallel zum Mittelbereich 4 und sind gegenüber dem Mittelbereich 4 in Richtung auf die Unterseite 25 des Tandemmessers 1 versetzt. Die Unterseite 25 ist dabei die dem Boden im Betrieb, also in am Rasenmäher oder einem vergleichbaren Arbeitsgerät festgelegtem Zustand, zugewandte Seite, während die Oberseite 24 die dem Rasenmäher zugewandte und dem Boden abgewandte Seite ist. Demgemäß erstrecken sich die Schneiden 8 und 9 jeweils an der der Unterseite 25 zugewandten Seite der Messer 2, 3, während die angeschliffene Anschrägung 22 auf der der Oberseite 24 zugewandten Seite angebracht ist.

In jedem Seitenbereich 5 des Tandemmessers 1 besitzt das Grundmesser 2 eine Lasche 13, die jeweils durch eine Aussparung 12 im Aufsatzmesser 3 ragt. Die Laschen 13 sind jeweils an ihrer der Drehachse 10 zugewandten Seite 18 am Grundmesser 2 festgelegt und erstrecken sich etwa parallel zur Ebene des Aufsatzmessers 3 im Seitenbereich 5 in Richtung auf die Enden 14 und 15 des Grundmessers 2 bzw. auf die Enden 16, 17 des Aufsatzmessers 3 zu. Die Laschen 13 übergreifen dabei mit ihrem freien Ende 34 den Rand 35 der Aussparungen 12 um einen Abstand r. Hierdurch ist das Aufsatzmesser 3 am Grundmesser 2 in Richtung der Drehachse 10 fixiert. Im Übergangsbereich 19 besitzen die beiden Messer 2, 3 einen Abstand e zueinander, der ein Verschieben der beiden Messer gegeneinander in Verschieberichtung 36 erlaubt. Die Verschieberichtung 36 verläuft parallel zur Längsachse 11 des Tandemmessers 1. Der gesamte durch die beidseitig gebildeten Abstände e ermöglichte Verschiebeweg entspricht dabei mindestens dem Doppelten des Abstands r, so daß durch Verschieben des Aufsatzmessers 3 gegenüber dem Grundmesser 2 zuerst die erste und dann die zweite Lasche 13 aus ihrer Aussparung 12 gelöst werden kann.

Beidseitig des Seitenbereichs 5 des Tandemmessers 1 besitzt das Aufsatzmesser 2 Endbereiche 21, an denen die Schneiden 8 und 9 ausgebildet sind. Im Bereich der beiden Enden 16 und 17 des Aufsatzmessers 3 ist die entgegen der Drehrichtung liegende Ecke 23 in Richtung auf die Oberseite 24 des Tandemmessers 1 gebogen. Das Grundmesser 2 besitzt in einem an den Seitenbereich 5 des Tandemmessers 1 angrenzenden Bereich einen Steigungsbereich 27, der gegenüber der durch den Mittelbereich 4 definierten Ebene geneigt ist sowie einen an den Steigungsbereich 27 anschließenden Endbereich 20. Die an den Enden 14 und 15 am Endbereich 20 entgegen der Fahrtrichtung liegenden Ecken 23 des Grundmessers 2 sind ebenfalls auf die Oberseite 24 gebogen. Im Endbereich 20 verläuft das Messer abgesehen von der gebogenen Ecken 23 im wesentlichen parallel zum Mittelbereich 4. Die Schneiden 8 des Grundmessers 2 besitzen im Bereich ihrer Enden 14 und 15 zu den Schneiden 9 des Aufsatzmessers 3 an den Enden 16 und 17 einen Abstand h in Richtung der Drehachse 10. Im Bereich der Enden 14, 15, 16, 17 ist das Grundmesser 2 gegenüber dem Aufsatzmesser 3 in Richtung auf die Oberseite 24 des Tandemmessers 1 versetzt. Die Schneiden 8 und 9 verlaufen parallel zur Längsachse 11 des Tandemmessers 1. Auch die Verschieberichtung 36 verläuft parallel zur Längsachse 11. In der in Fig. 2 gezeigten Draufsicht gesehen liegen die Endbereiche 20 und 21 der beiden Messer 2, 3 nebeneinander.

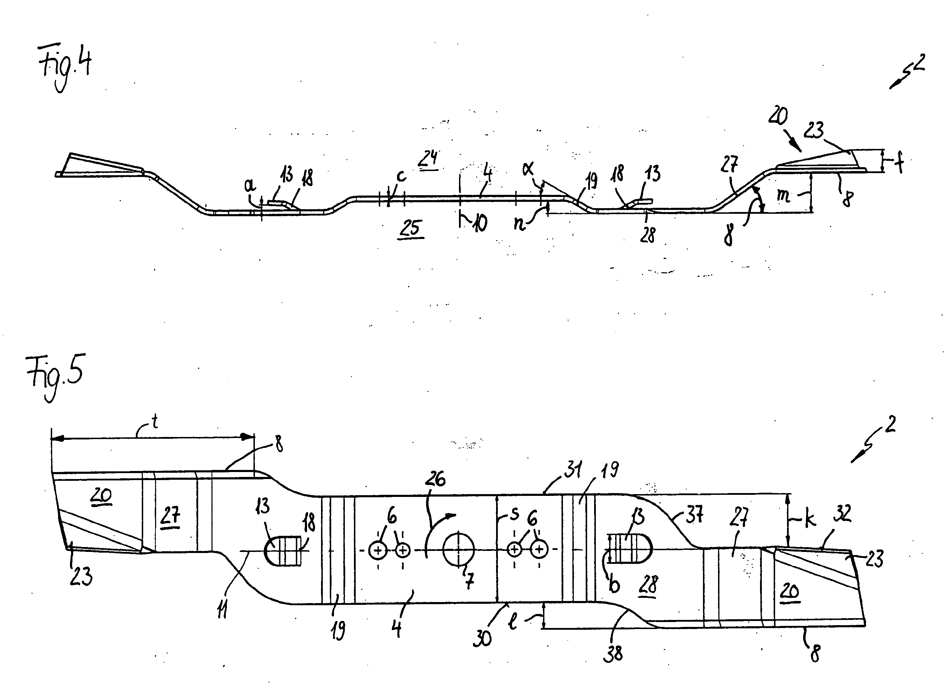

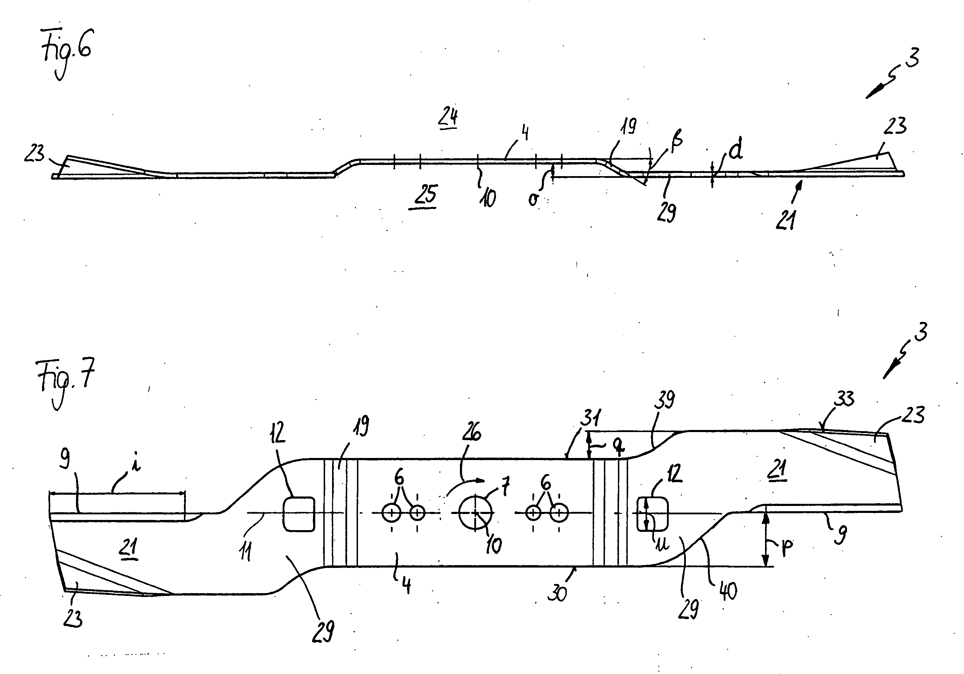

In den Fig. 4 und 5 ist das Grundmesser 2 in Seitenansicht und in Draufsicht dargestellt. Das Grundmesser 2 ist aus einem Blech gebildet und besitzt eine Dicke c. Im Übergangsbereich 19 ist das Grundmesser 2 gegenüber der durch den Mittelbereich 4 definierten Ebene um einen Winkel α geneigt. Der Seitenbereich 28 des Grundmessers 2, der an der dem Mittelbereich 4 abgewandten Seite an den Übergangsbereich 19 anschließt, ist um einen Abstand n gegenüber dem Mittelbereich 4 in Richtung auf die Unterseite 25 des Tandemmessers 1 versetzt. An der Oberseite 24 sind im Seitenbereich 28 die Laschen 13 angeordnet. Die Laschen 13 verlaufen im wesentlichen parallel zum Seitenbereich 28 in einem Abstand a zum Seitenbereich 28. Der Abstand a beträgt dabei insbesondere das ein- bis eineinhalbfache der in Fig. 6 gezeigten Dicke d des Aufsatzmessers 3.

Wie Fig. 5 zeigt besitzen die Laschen 13 eine senkrecht zur Drehachse 10 und senkrecht zur Längsachse 11 des Tandemmessers 1 gemessene Breite b, die kleiner, insbesondere nur geringfügig kleiner als die in Fig. 7 gezeigte Breite u der Aussparung 12 im Aufsatzmesser 3 ist. Die Erstreckung der Aussparung 12 in Richtung der Längsachse 11 ist so gewählt, daß die Lasche 13 durch die Aussparung 12 durchgesteckt werden kann. In dem an den Seitenbereich 28 anschließenden Steigungsbereich 27 ist das Grundmesser 2 um einen Winkel γ gegenüber dem Seitenbereich 28 geneigt. Im an den Steigungsbereich 27 angrenzenden Endbereich 20 verläuft das Grundmesser 2 bis auf die abgebogene Ecke 23 parallel zum Mittelbereich 4. Der Endbereich 20 ist dabei um einen Abstand m gegenüber dem Seitenbereich 28 in Richtung auf die Oberseite 24 versetzt.

Wie Fig. 4 zeigt besitzt die abgebogene Ecke 23 zur Schneide 8 einen Abstand f. Die Schneide 8 ist dabei auf der der Unterseite 25 zugewandten Seite des Grundmessers 2 ausgebildet. Wie Fig. 5 zeigt besitzt die Schneide 8 eine Länge t. In Draufsicht (Fig. 5) besitzt das Grundmesser 2 im Mittelbereich 4 und in den Übergangsbereichen 19 eine rechteckige Form. In den Seitenbereichen 28 verlaufen die vorlaufende Kante 38 und die nachlaufende Kante 37 in Draufsicht gesehen gebogen. Die Schneide 8 besitzt zur vorlaufenden Kante 30 im Mittelbereich 4 einen Versatz 1 in Drehrichtung 26, so daß der Abstand der Schneide 8 zur Längsachse 11 größer als der der vorlaufenden Kante 30 ist. Die nachlaufende Kante 32 im Endbereich 20 ist gegenüber der nachlaufenden Kante 31 im Mittelbereich 4 in Richtung auf die Längsachse 11 versetzt. Die Kanten 31, 32 besitzen einen Versatz k zueinander. Die Kante 32 verläuft dabei im Bereich der Längsachse 11.

Die Fig. 6 und 7 zeigen das Aufsatzmesser 3. Das Aufsatzmesser 3 ist im Übergangsbereich 19 um einen Winkel β geneigt, so daß der an den Übergangsbereich 19 anschließende Seitenbereich 29 des Aufsatzmessers 3 gegenüber dem Mittelbereich 4 in Richtung der Drehachse 10 um einen Abstand o in Richtung auf die Unterseite 25 versetzt ist. Der Seitenbereich 29 des Aufsatzmessers 3 geht eben in den Endbereich 21 über. Der Endbereich 21 ist bis auf die abgebogene Ecke 23 eben ausgebildet.

Wie die Draufsicht in Fig. 7 zeigt besitzen die Schneiden 9 des Aufsatzmessers 3 eine Länge i. Die Länge i ist dabei kleiner als die Länge t der Schneiden 8 des Grundmessers 2. Das Aufsatzmesser 3 ist im Mittelbereich 4 und in den beidseitig anschließenden Übergangsbereichen 19 in Draufsicht rechteckig ausgebildet. Die Form des Aufsatzmessers 3 entspricht dabei der des Grundmessers 2, so daß die beiden Messer 2, 3 deckungsgleich übereinander gelegt werden können. Wie Fig. 5 zeigt, besitzt das Grundmesser 2 im Mittelbereich 4 eine Breite s, die der Breite des Aufsatzmessers 3 entspricht. Die Kanten 39 und 40 im Seitenbereich 29 verlaufen bogenförmig. Die Schneide 9 am Endbereich 21 ist gegenüber der vorlaufenden Kante 30 am Mittelbereich 4 um einen Versatz p in Richtung auf die Längsrichtung 11 hin versetzt. Die nachlaufende Kante 33 am Endbereich 21 ist gegenüber der nachlaufenden Kante 31 am Mittelbereich 4 um einen Versatz q versetzt, so daß die Kante 33 zur Längsrichtung 11 einen größeren Abstand als die Kante 31 besitzt. Der Versatz p ist dabei so gewählt, daß die Schneide 9 etwa im Bereich der Längsrichtung 11 angeordnet ist. Die Schneide 9 ist somit bei zusammengesetztem Tandemmesser 1 etwa im Bereich der nachlaufenden Kante 32 am Grundmesser 2 angeordnet.

## Patentansprüche

1. Tandemmesser für einen Rasenmäher oder dgl., das eine längliche Form besitzt und in einem Mittelbereich (4) eben ausgebildet ist und das eine Aufnahme (7) für eine Antriebswelle zum rotierenden Antrieb des Tandemmessers (1) um seine Drehachse (10) aufweist, wobei das Tandemmesser (1) mindestens zwei Schneiden (8, 9) besitzt, die an einem Endbereich (20, 21) des Tandemmessers (1) etwa in Richtung der Längsachse (11) des Tandemmessers (1) verlaufen, und die Schneiden (8, 9) in Drehrichtung (26) des: Tandemmessers (1) hintereinander liegen und die Schneiden (8, 9) in Richtung der Drehachse (10) einen Abstand (h) zueinander aufweisen und wobei das Tandemmesser (1) ein Grundmesser (2) und ein lösbar auf das Grundmesser (2) aufgesetztes Aufsatzmesser (3) besitzt und eine Schneide (8) am Grundmesser (2) und eine Schneide (9) am Aufsatzmesser (3) angeordnet ist,
**dadurch gekennzeichnet, daß** das Grundmesser (2) mindestens eine Lasche (13) besitzt, die das Aufsatzmesser (3) in Richtung der Drehachse (10) am Grundmesser (2) hält.

2. Tandemmesser nach Anspruch 1,
**dadurch gekennzeichnet, daß** das Tandemmesser (1) an beiden Endbereichen (20, 21) jeweils zwei Schneiden (8, 9) besitzt.

3. Tandemmesser nach Anspruch 1 oder 2,
**dadurch gekennzeichnet, daß** die Lasche (13) durch eine Aussparung (12) am Aufsatzmesser ragt, wobei die Lasche (13) insbesondere in einem Abstand (a) zum Grundkörper (2) verläuft, der etwa dem ein- bis eineinhalbfachen der Dicke (d) des Aufsatzmesser (3) entspricht.

4. Tandemmesser nach Anspruch 1,
**dadurch gekennzeichnet, daß** das Aufsatzmesser (3) auf dem Grundmesser (2) in einer Ebene parallel zu der durch den Mittelbereich (4) definierten Ebene um einen Verschiebeweg verschiebbar gehalten ist, wobei vorzugsweise der gesamte Verschiebeweg insbesondere mindestens dem Doppelten des Abstands (r) entspricht, um den eine Lasche (13) in Verschieberichtung (36) hinter den Rand (35) einer Aussparung (12) greift.

5. Tandemmesser nach Anspruch 3,
**dadurch gekennzeichnet, daß** zwei Laschen (13) vorgesehen sind, wobei jede Lasche (13) zwischen der Drehachse (10) und einem Ende (14, 15) des Grundmessers (2) angeordnet ist.

6. Tandemmesser nach einem der Ansprüche 3 bis 5,
**dadurch gekennzeichnet, daß** die Lasche (13) an ihrer der Drehachse (10) zugewandten Seite (18) am Grundmesser (2) festgelegt ist.

7. Tandemmesser nach einem der Ansprüche 1 bis 6,
**dadurch gekennzeichnet, daß** das Grundmesser (2) im Mittelbereich (4) auf der im Betrieb dem Boden zugewandten Unterseite (25) des Tandemmessers (1) angeordnet ist und an den Endbereichen auf der Oberseite (24).

8. Tandemmesser nach einem der Ansprüche 1 bis 7,
**dadurch gekennzeichnet, daß** die Schneide (8) am Grundmesser (2) vorlaufend zur benachbarten Schneide (9) am Aufsatzmesser (3) angeordnet ist und die Schneide (8) am Grundmesser (2) vorzugsweise länger als die Schneide (9) am Aufsatzmesser (3) ausgebildet ist.

9. Tandemmesser nach einem der Ansprüche 1 bis 8,
**dadurch gekennzeichnet, daß** der Endbereich (20) des Grundmessers (2) parallel zum Mittelbereich (4) des Tandemmessers (1) verläuft und in einem an dem Endbereich angrenzenden Steigungsbereich (22) in einem Winkel (γ) zur Ebene des Mittelbereichs (4) verläuft und die Schneide (8) am Grundmesser (2) sich vorzugsweise über den Endbereich (20) und insbesondere den Steigungsbereich (27) erstreckt.

10. Tandemmesser nach einem der Ansprüche 1 bis 9,
**dadurch gekennzeichnet, daß** der Endbereich (20) des Grundmessers (2) gegenüber dem Mittelbereich (4) in Drehrichtung (26) versetzt ist und/oder der Endbereich (21) des Aufsatzmessers (3) gegenüber dem Mittelbereich (4) entgegen der Drehrichtung (26) versetzt ist.

11. Tandemmesser nach einem der Ansprüche 1 bis 10,
**dadurch gekennzeichnet, daß** die entgegen der Drehrichtung (26) liegende Ecke (23) am Endbereich (20, 21) mindestens eines Messers (2, 3) gegenüber einer zum Mittelbereich (4) parallelen Ebene auf die Oberseite (24) des Tandemmessers (1) gebogen ist.

12. Tandemmesser nach einem der Ansprüche 1 bis 11,
**dadurch gekennzeichnet, daß** beidseitig der Aufnahme (7) für die Antriebswelle Befestigungsöffnungen (6) zur Fixierung der beiden Messer (2, 3) gegeneinander angeordnet sind.

13. Tandemmesser nach einem der Ansprüche 1 bis 12,
**dadurch gekennzeichnet, daß** der Mittelbereich (4) gegenüber einem beidseitig des Mittelbereichs (4) ausgebildeten Seitenbereich (5, 28, 29) in Richtung auf die Oberseite (24) des Tandemmessers (1) versetzt ist, wobei der Seitenbereich (29) des Aufsatzmessers (3) vorzugsweise eben in den Endbereich (21) des Aufsatzmessers (3) übergeht.

## Claims

1. Tandem cutting blade for a lawnmower or suchlike, which has an elongated shape and is flat in a central area (4) in which there is a hole (7) for a driveshaft that drives the tandem blade (1) in rotation about its rotation axis (10), such that the tandem blade (1) has at least two cutting edges (8, 9) that extend on an end area (20, 21) of the tandem blade (1) substantially in the direction of the longitudinal axis (11) of the tandem blade (1), the said cutting edges (8, 9) being positioned one behind the other in the rotation direction (26) of the tandem blade (1) and the cutting edges (8, 9) being spaced a distance (h) apart form one another in the direction of the rotation axis (10), and such that the tandem blade (1) comprises a main blade (2) and an attached blade (3) fixed detachably onto the main blade (2), with one cutting edge (8) arranged on the main blade (2) and one cutting edge (9) on the attached blade (3), **characterised in that** the main blade (2) has at least one tab (13) which holds the attached blade (3) onto the main blade (2) in the direction of the rotation axis (10).

2. Tandem blade according to Claim 1,
**characterised in that** the tandem blade (1) has two cutting edges (8, 9) at each of its two ends (20, 21).

3. Tandem blade according to Claims 1 or 2,
**characterised in that** the tab (13) projects through an opening (12) in the attached blade (3), in particular such that the tab (13) extends at a distance (a) from the main blade (2) that corresponds approximately to one to one and a half times the thickness (d) of the attached blade (3).

4. Tandem blade according to Claim 1,
**characterised in that** the attached blade (3) is held on the main blade (2) in a plane parallel to the plane defined by the central area (4) and can be displaced along a displacement path, in particular such that the full displacement path preferably corresponds to at least twice the distance (r) by which a tab (13) engages behind the edge (35) of an opening (12) in the displacement direction (36).

5. Tandem blade according to Claim 3,
**characterised in that** two tabs (13) are provided, each tab (13) being arranged between the rotation axis (10) and a respective end (14, 15) of the main blade (2).

6. Tandem blade according to any of Claims 3 to 5,
**characterised in that** the tab (13) is attached to the main blade (2) at the end (18) of the tab nearest the rotation axis (10).

7. Tandem blade according to any of Claims 1 to 6,
**characterised in that** the main blade (2) is arranged in the central area (4) on the underside (25) of the tandem blade (1) facing the ground during operation, and at the end areas on the upper side (24).

8. Tandem blade according to any of Claims 1 to 7,
**characterised in that** the cutting edge (8) on the main blade (2) id positioned ahead of the adjacent cutting edge (9) on the attached blade (3), and the cutting edge (8) on the main blade (2) is preferably made longer than the cutting edge (9) on the attached blade (3).

9. Tandem blade according to any of Claims 1 to 8,
**characterised in that** the end area (20) of the main blade (2) extends parallel to the central area (4) of the tandem blade (1) and, in a rising portion (22) adjoining the end area, extends at an angle (γ) to the plane of the central area (4), and the cutting edge (8) on the main blade (2) preferably extends over the end area (20) and in particular the rising portion (27).

10. Tandem blade according to any of Claims 1 to 9,
**characterised in that** the end area (20) of the main blade (2) is offset relative to the central area (4) in the rotation direction (26) and/or the end area (21) of the attached blade (3) is offset relative to the central area (4) in the direction opposite to the rotation direction (26).

11. Tandem blade according to any of Claims 1 to 10,
**characterised in that** the corner (23) on the end area (20, 21) of at least one blade (2, 3) located in the direction opposite to the rotation direction (26) is bent into a plane parallel to the central area (4) on the upper side (24) of the tandem blade (1).

12. Tandem blade according to any of Claims 1 to 11,
**characterised in that** on both sides of the hole (7) for the driveshaft, fixing openings (6) are arranged to enable attachment of the two blades (2, 3) to one another.

13. Tandem blade according to any of Claims 1 to 12,
**characterised in that** the central area (4) is offset relative to a side area (5, 28, 29) formed on either side of the central area (4) in the direction towards the upper side (24) of the tandem blade (1), such that the side area (29) of the attached blade (3) preferably merges smoothly into the end area (21) of the attached blade (3).

## Revendications

1. Lame tandem pour une tondeuse à gazon ou similaires qui possède une forme oblongue et est réalisée de manière plane dans une zone médiane (4) et qui présente un logement (7) pour un arbre d'entraînement pour l'entraînement en rotation de la lame tandem (1) autour de son axe de rotation (10), la lame tandem (1) possédant au moins deux tranchants (8, 9) qui s'étendent à peu près en direction de l'axe longitudinal (11) de la lame tandem (1) sur une zone d'extrémité (20, 21) de la lame tandem (1), et les tranchants (8, 9) reposant l'un derrière l'autre dans le sens de rotation (26) de la lame tandem (1) et les tranchants (8, 9) présentant en direction de l'axe de rotation (10) une distance (h) l'un par rapport à l'autre et la lame tandem (1) possédant une lame de base (2) et une lame rapportée (3) placée de manière amovible sur la lame de base (2) et un tranchant (8) étant disposé sur la lame de base (2) et un tranchant (9) sur la lame rapportée (3), **caractérisée en ce que** la lame de base (2) possède au moins une languette (13) qui maintient la lame rapportée (3) en direction de l'axe de rotation (10) sur la lame de base (2).

2. Lame tandem selon la revendication 1, **caractérisée en ce que** la lame tandem (1) possède sur les deux zones d'extrémité (20, 21) respectivement deux tranchants (8, 9).

3. Lame tandem selon la revendication 1 ou 2, **caractérisée en ce que** la languette (13) traverse un évidement (12) sur la lame rapportée, la languette (13) s'étendant notamment à une distance (a) par rapport au corps de base (2) qui correspond à peu près à une à une fois et demi l'épaisseur (d) de la lame rapportée (3).

4. Lame tandem selon la revendication 1, **caractérisée en ce que** la lame rapportée (3) est maintenue de manière mobile d'une course de déplacement sur la lame de base (2) dans un plan parallèlement au plan défini par la zone médiane (4), de préférence la course de déplacement entière correspondant notamment au moins au double de la distance (r), de laquelle une languette (13) s'engage dans le sens de déplacement (36) derrière le bord (35) d'un évidement (12).

5. Lame tandem selon la revendication 3, **caractérisée en ce que** deux languettes (13) sont prévues, chaque languette (13) étant disposée entre l'axe de rotation (10) et une extrémité (14, 15) de la lame de base (2).

6. Lame tandem selon l'une quelconque des revendications 3 à 5, **caractérisée en ce que** la languette (13) est fixée sur son côté (18) dirigé vers l'axe de rotation (10) sur la lame de base (2).

7. Lame tandem selon l'une quelconque des revendications 1 à 6, **caractérisée en ce que** la lame de base (2) est disposée dans la zone médiane (4) sur la face inférieure (25) dirigée en fonctionnement vers le sol de la lame tandem (1) et sur les zones d'extrémité sur la face supérieure (24).

8. Lame tandem selon l'une quelconque des revendications 1 à 7, **caractérisée en ce que** le tranchant (8) est disposé sur la lame de base (2) en avant du tranchant (9) contigu sur la lame rapportée (3) et le tranchant (8) est réalisé sur la lame de base (2) de préférence plus long que le tranchant (9) sur la lame rapportée (3).

9. Lame tandem selon l'une quelconque des revendications 1 à 8, **caractérisée en ce que** la zone d'extrémité (20) de la lame de base (2) s'étend parallèlement à la zone médiane (4) de la lame tandem (1) et s'étend dans une zone ascendante (22) contiguë à la zone d'extrémité dans un angle (y) par rapport au plan de la zone médiane (4) et le tranchant (8) sur la lame de base (2) s'étend de préférence sur la zone d'extrémité (20) et notamment la zone ascendante (27).

10. Lame tandem selon l'une quelconque des revendications 1 à 9, **caractérisée en ce que** la zone d'extrémité (20) de la lame de base (2) est décalée par rapport à la zone médiane (4) dans le sens de rotation (26) et/ou la zone d'extrémité (21) de la lame rapportée (3) est décalée par rapport à la zone médiane (4) dans le sens inverse de rotation (26).

11. Lame tandem selon l'une quelconque des revendications 1 à 10, **caractérisée en ce que** l'extrémité (23) se trouvant dans le sens inverse de rotation (26) est pliée sur la zone d'extrémité (20, 21) d'au moins une lame (2, 3) par rapport au plan parallèle à la zone médiane (4) sur la face supérieure (24) de la lame tandem (1).

12. Lame tandem selon l'une quelconque des revendications 1 à 11, **caractérisée en ce que** des deux côtés du logement (7) pour l'arbre d'entraînement, des ouvertures de fixation (6) sont disposées pour la fixation des deux lames (2, 3) l'une contre l'autre.

13. Lame tandem selon l'une quelconque des revendications 1 à 12, **caractérisée en ce que** la zone médiane (4) est décalée par rapport à une zone latérale (5, 28, 29) réalisée des deux côtés de la zone médiane (4) en direction de la face supérieure (24) de la lame tandem (1), la zone latérale (29) de la lame rapportée (3) se fondant de préférence de manière plane en zone d'extrémité (21) de la lame rapportée (3).
